# EUROPÄISCHE PATENTSCHRIFT

(11) **EP 1 026 412 B1**
(45) Veröffentlichungstag und Bekanntmachung des Hinweises auf die Patenterteilung: **31.03.2004**
(21) Anmeldenummer: 99123478.2
(22) Anmeldetag: 25.11.1999
(51) Int. Cl.: F16B 13/06, F16B 13/12, F16B 13/00

(54) **Dübel**
Dowel
Cheville

(30) Priorität: 04.02.1999 DE 19904580
(43) Veröffentlichungstag der Anmeldung: 09.08.2000
(73) Patentinhaber: fischerwerke Artur Fischer GmbH & Co. KG, 72178 Waldachtal (DE)
(72) Erfinder: Daly, Aaron, 72178 Waldachtal (DE)

(56) Entgegenhaltungen:
- EP-A- 0 534 970
- FR-A- 1 404 131

## Beschreibung

Die Erfindung betrifft einen Dübel mit den Merkmalen des Oberbegriffs des Anspruchs 1, der zur Verankerung in Hohlbaustoffen vorgesehen ist.

Ein derartiger Dübel ist bekannt aus der EP 0 534 970 B1. Der bekannte Dübel weist eine Schafthülse auf, durch die eine Spreizschraube durchführbar ist. In axialer Verlängerung und mit Abstand von der Schafthülse weist der bekannte Dübel ein Spreizelement auf, in das die durch die Schafthülse durchgeführte Spreizschraube einschraubbar ist. Durch Anziehen der Spreizschraube wird das Spreizelement in Richtung der Schafthülse gezogen. Verbunden sind das Spreizelement und die Schafthülse über zwei einander gegenüber angeordnete Kniegelenkhebelanordnungen. Die Kniegelenkhebelanordnungen weisen zwei Kniehebel auf, deren einer gelenkig mit dem Spreizelement, deren anderer gelenkig mit der Schafthülse und die beide gelenkig miteinander verbunden sind. Die gelenkigen Verbindungen sind durch eine Verformbarkeit eines Kunststoffs, aus dem sie bestehen, bewirkt. Die Kniehebel stehen in einem Winkel zueinander, sie sind nach außen ausgestellt.

Zur Verankerung wird der bekannte Dübel in ein Bohrloch beispielsweise in einer Gipskartonplatte gesteckt. Dabei gelangen das Spreizelement und die Kniehebelgelenkhebelanordnungen durch die Gipskartonplatte hindurch, die Schafthülse befindet sich in dem Bohrloch in der Gipskartonplatte. Die Kniegelenkhebelanordnungen werden zum Durchstecken durch die Gipskartonplatte elastisch zusammengedrückt und stellen sich wieder nach außen aus, wenn sie die Gipskartonplatte überwunden haben. Anschließend wird eine durch die Schafthülse durchgeführte Spreizschraube in das Spreizelement eingeschraubt und angezogen. Dadurch wird das Spreizelement an die Schafthülse herangezogen, d.h. der Abstand zwischen Schafthülse und Spreizelement verkleinert sich, wodurch die Kniegelenkhebelanordnungen weiter nach außen ausgestellt werden. Die Kniegelenkhebelanordnungen hintergreifen die Gipskartonplatte und bewirken dadurch die Verankerung des bekannten Dübels.

Der bekannte Dübel hat den Nachteil, daß eine Steifigkeit der Kniegelenkhebelanordnungen in seitlicher Richtung, die das Spreizelement gegen ein Verdrehen in Bezug auf die Schafthülse beim Einschrauben der Spreizschraube abstützt, beschränkt ist. Es besteht die Gefahr, daß sich das Spreizelement beim Einschrauben und Anziehen der Spreizschraube gegenüber der Schafthülse verdreht, wodurch die Kniegelenkhebelanordnungen nicht ausgestellt sondern um das Spreizelement herum gewickelt werden. Die Kniegelenkhebelanordnungen hintergreifen in diesem Fall die Gipskartonplatte nicht, der Dübel ist nicht oder allenfalls mit sehr geringer Verankerungskraft verankert.

Der Erfindung liegt die Aufgabe zugrunde, einen Dübel der eingangs genannten Art so weiterzubilden, daß sein Spreizelement beim Eindrehen und Anziehen der Spreizschraube verdrehsicher in Bezug auf die Schafthülse gehalten ist.

Diese Aufgabe wird erfindungsgemäß durch die Merkmale des Anspruchs 1 gelöst. Der erfindungsgemäße Dübel weist eine Verdrehsicherungseinrichtung auf, mit der das Spreizelement in Eingriff gelangt, wenn es mit der Spreizschraube an die Schafthülse herangezogen wird. Die Verdrehsicherungseinrichtung kann als eine Art Schiebeführung angesehen werden, die eine Axialbewegung des Spreizelements in Bezug auf die Schafthülse zuläßt und eine Verdrehung des Spreizelements gegenüber der Schafthülse verhindert. Die Erfindung hat den Vorteil, daß sie eine Verdrehung des Spreizelements gegenüber der Schafthülse beim Eindrehen und Anziehen der Spreizschraube verhindert und dadurch sicherstellt, daß die Kniegelenkhebelanordnungen beim Anziehen der Spreizschraube wie vorgesehen nach außen ausgestellt werden, so daß der Dübel in einem Hohlbaustoff durch Hintergriff verankert ist.

Zur Verdrehsicherung weist das Spreizelement einen unrunden Querschnitt und die Schafthülse eine komplementäre Aufnahme auf, in die das Spreizelement gelangt, wenn es mit der Spreizschraube in Richtung der Schafthülse gezogen wird. Durch seinen unrunden Querschnitt und die komplementäre Aufnahme ist das Spreizelement verdrehgesichert an der Schafthülse gehalten, wenn es in der Aufnahme einliegt. Die Axialbewegung des Spreizelements wird von der Aufnahme nicht verhindert.

Bei einer Weiterbildung der Erfindung weist die Aufnahme zwei Zungen auf, die parallel zueinander und mit Abstand voneinander angeordnet sind. Die beiden Zungen stehen von der Schafthülse in Richtung des Spreizelements ab. Wird das Spreizelement durch Anziehen der Spreizschraube in Richtung der Schafthülse gezogen, gelangt das Spreizelement zwischen die beiden Zungen, die das Spreizelement verdrehsicher an der Schafthülse halten.

Bei einer Ausgestaltung der Erfindung ist die Schafthülse als Spreizhülse ausgebildet, sie wird durch Eindrehen der Spreizschraube, wie an sich von Spreizdübeln her bekannt, aufgespreizt und dadurch in der Gipskartonplatte verankert. Durch die Ausbildung der Schafthülse als Spreizhülse wird eine Verankerung zusätzlich zum Hintergriff der ausgestellten Kniegelenkhebelanordnungen bewirkt und die Verankerungskraft des Dübels erhöht. Weiterer Vorteil der Ausbildung der Schafthülse als Spreizhülse ist deren fester Sitz in radialer Richtung im Bohrloch, die als Spreizhülse ausgebildete Schafthülse stützt den Dübel gegen Querbeanspruchung im Bohrloch ab.

Bei einer Weiterbildung der Erfindung weist die Spreizhülse eine oder mehrere Trennstellen auf, die beim Eindrehen der Spreizschraube und/oder durch Einziehen des Spreizelements in die Schafthülse abgerissen werden. Die Trennstellen ermöglichen es, das Spreizelement in die Schafthülse hineinzuziehen, so daß das Spreizelement die als Spreizhülse ausgebildete Schafthülse zusätzlich aufspreizt und deren Verankerung im Bohrloch verbessert. Insbesondere ist es möglich, die Schafthülse mit dem Spreizelement so aufzuspreizen, daß sich die Schafthülse in Richtung des Spreizelements, also entgegen einer Ausziehrichtung des Dübels, aufweitet. In einem weichen Baustoff wie beispielsweise einer Gipskartonplatte, Gasbeton oder dgl. wird durch das Aufspreizen der Schafthülse mit dem Spreizelement ein Hinterschnitt geschaffen, der den Dübel an der Schafthülse durch Hinterschnitt formschlüssig hält. Die Verankerungskraft des Dübels wird dadurch weiter gesteigert.

Bei einer Ausgestaltung der Erfindung weist der Dübel eine Abstützung für die Kniehebelanordnung auf, die die Kniehebelanordnung in der ausgestellten Stellung abstützt. Die Abstützung kann beispielsweise ein Anschlag sein, der die Kniegelenkhebelanordnung in der ausgestellten Stellung abstützt und einen Schwenkwinkel der Kniegelenkhebel begrenzt.

Die Erfindung wird nachfolgend anhand eines in der Zeichnung dargestellten Ausführungsbeispiels näher erläutert. Es zeigen:
- Figur 1: einen erfindungsgemäßen Dübel in perspektivischer Darstellung;
- Figur 2: den Dübel aus Figur 1 in Seitenansicht eingesetzt in eine Gipskartonplatte in unverankertem Zustand;
- Figur 3: den Dübel aus Figur 2 aus einem anderen Blickwinkel; und
- Figur 4: den Dübel aus Figuren 1 bis 3 in verankertem Zustand in einer Figur 3 entsprechenden Darstellung.

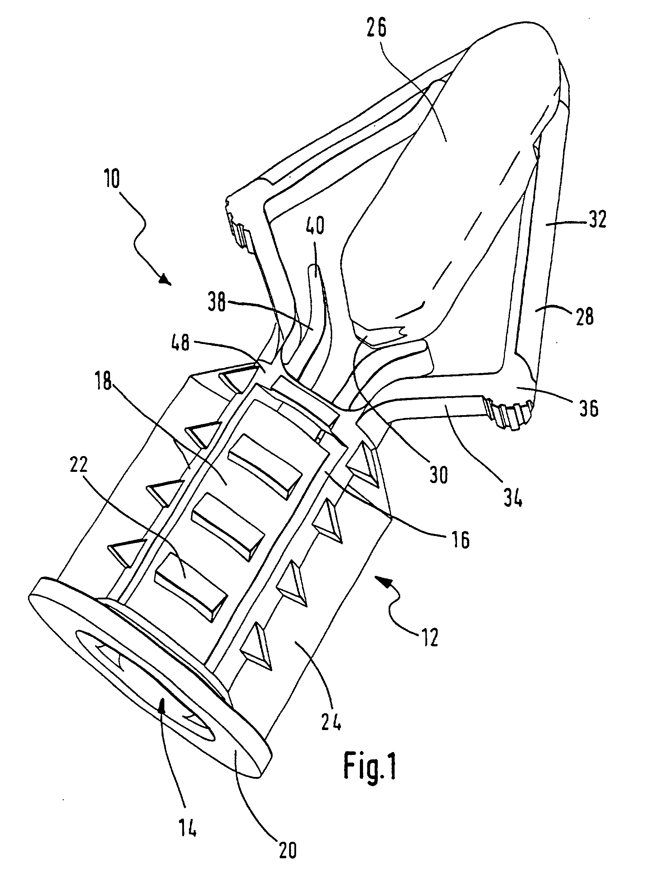

Der in Figur 1 dargestellte, erfindungsgemäße Dübel 10 ist einstückig als Spritzgießteil aus Kunststoff hergestellt. Er weist eine hohlzylindrische Schafthülse 12 mit einem durchgehenden Mittelloch 14 auf, die durch vier Längsschlitze 16 in vier Spreizzungen 18 unterteilt ist. Durch die Spreizzungen 18 ist die Schafthülse 12 als Spreizhülse 12 ausgebildet. An einem hinteren Ende weist die Spreizhülse 12 einen seitlich abstehenden Bund 20 auf. Von den Spreizzungen 18 stehen Ankerzähne 22 mit sägezahnförmigem Querschnitt nach außen ab. Desweiteren weisen zwei Spreizzungen 18 in Dübellängsrichtung verlaufende, nach außen abstehende Verdrehsicherungsrippen 24 auf.

In axialer Verlängerung der Schafthülse 12 weist der Dübel 10 ein Spreizelement 26 auf, das mit Abstand von der Schafthülse 12 angeordnet ist und mittelbar über zwei einander gegenüberliegend angeordnete Kniegelenkhebelanordnungen 28 mit der Schafthülse 12 verbunden ist. Das Spreizelement 26 ist ein längliches, im Querschnitt rechteckiges Teil mit einem in Längsrichtung durchgehenden Einschraubloch 30.

Die Kniegelenkhebelanordnungen 28 weisen jeweils zwei Kniegelenkhebel 32, 34 auf, die über ein Kniehebelgelenk 36 schwenkbar miteinander verbunden sind. Die Schwenkbarkeit der Kniegelenkhebel 32, 34 gegeneinander wird durch eine Verformbarkeit des Kunststoffs, aus dem sie bestehen, im Bereich des Kniehebelgelenks 36 bewirkt. Die Kniegelenkhebel 32, 34 sind einstückig miteinander verbunden. Das Kniehebelgelenk 36 ist eine verformbare Stelle.

An einem dem Kniehebelgelenk 36 fernen Ende ist einer der beiden Kniegelenkhebel 32 einstückig und durch die Verformbarkeit des Kunststoffs gelenkig mit einem vorderen Ende des Spreizelements 26 verbunden. Das vordere Ende des Spreizelements 26 ist das der Schafthülse 12 ferne Ende des Spreizelements 26. Der andere Kniegelenkhebel 34 ist mit seinem dem Kniehebelgelenk 36 fernen Ende einstückig und durch die Verformbarkeit des Kunststoffs gelenkig mit einem vorderen Ende der Schafthülse 12 verbunden. Das vordere Ende der Schafthülse 12 ist dem Spreizelement 26 zu- und dem Bund 20 abgewandt. Die Kniegelenkhebel 32, 34 sind in einem Winkel zueinander angeordnet, sie stehen schräg und sind nach außen ausgestellt, die Kniehebelgelenke 36 befinden sich seitlich außerhalb einer gedachten Mantelfläche der Schafthülse 12.

Vom vorderen Ende der Schafthülse 12 stehen zwei Zungen 38 in Richtung des Spreizelements 26 ab. Die Zungen 38 sind innerhalb der Kniegelenkhebelanordnungen 28 angeordnet, sie stehen parallel zueinander und weisen einen Abstand voneinander auf, der etwas kleiner als eine Breite des Spreizelementes 26 in derselben Richtung ist. Der Schafthülse 12 abgewandte Enden 40 der Zungen 38 sind bogenförmig voneinander weg nach außen geformt.

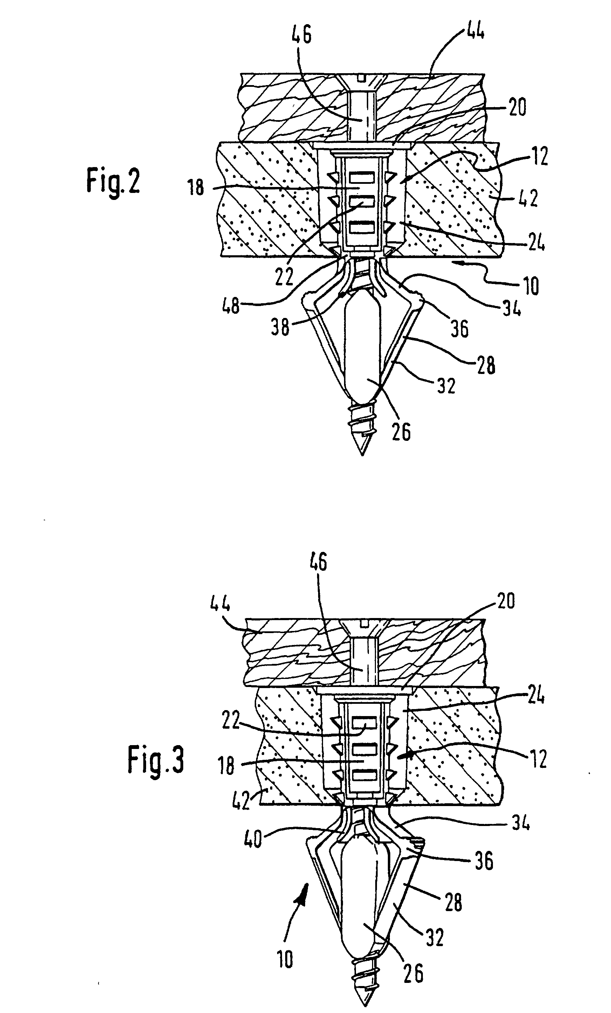

Die Verankerung des Dübels 10 an einem Hohlbaustoff wie beispielsweise einer Gipskartonplatte 42 wird nachfolgend anhand Figuren 2 bis 4 beschrieben. Der Dübel 10 wird, wie in Figuren 2 und 3 aus verschiedenen Blickwinkeln dargestellt, durch ein Loch in der Gipskartonplatte 42 durchgesteckt, bis er mit seinem Bund 20 aufsitzt. Das Loch hat in etwa den Durchmesser der Schafthülse 12, die Kniegelenke 36 müssen daher zum Durchstecken durch das Loch in der Gipskartonplatte 42 zusammengedrückt werden. Das Zusammendrücken der Kniegelenke 36 erfolgt dadurch, daß die pfeilspitzenförmig schräg stehenden vorderen Kniegelenkhebel 32 beim Einführen des Dübels 10 in das Loch zusammengedrückt werden. Die Kniehebelgelenke 36 können auch mit zwei Fingern zusammengedrückt werden. Die Schafthülse 12 hat eine Länge, die in etwa einer Dicke der Gipskartonplatte 42 entspricht, die Schafthülse 12 befindet sich nach dem Einstecken des Dübels 10 in der Gipskartonplatte 42, die Kniegelenkhebelanordnungen 28 und das Spreizelement 26 sind durch die Gipskartonplatte 42 hindurchgesteckt.

Anschließend wird ein zu befestigendes Teil, beispielsweise eine Holzlatte 44, auf die Gipskartonplatte 42 aufgesetzt, und eine handelsübliche Holzschraube als Spreizschraube 46 des Dübels 10 durch ein zuvor gebohrtes Loch durch die Holzlatte 44 durchgesteckt und in den Dübel 10 eingeschraubt. Die Holzschraube 46 tritt vollständig durch die Schafthülse 12 hindurch und schraubt sich in das Einschraubloch 30 des Spreizelementes 26 ein, wobei sich die Spreizschraube 46 ihr Gegengewinde in das Spreizelement 26 selbst schneidet. Die Spreizschraube 46 spreizt die als Spreizhülse 12 ausgebildete Schafthülse 12 auf, wodurch die Schafthülse 12 in der Gipskartonplatte 42 festgeklemmt wird. Die Verankerungszähne 22 graben sich in die Gipskartonplatte 42 ein und geben der Schafthülse 12 zusätzlichen Halt. Die Verdrehsicherungsrippen 24 drücken sich ebenfalls in die Gipskartonplatte 42 ein und sichern den Dübel 10 gegen Verdrehen beim Einschrauben und Festziehen der Spreizschraube 46.

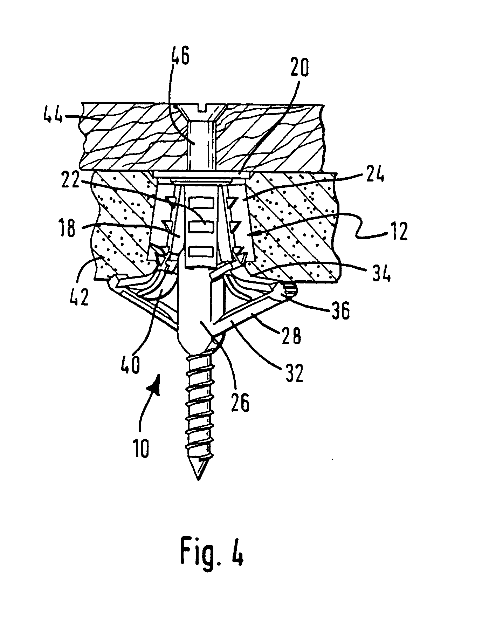

Wird die Spreizschraube 46 angezogen, zieht sie das Spreizelement 26 in Richtung der Schafthülse 12. Dadurch werden die Kniegelenkhebelanordnungen 28 nach außen ausgestellt und gelangen mit ihren hinteren Kniegelenkhebeln 34 in Anlage an die Gipskartonplatte 42, wie in Figur 4 zu sehen. Die Kniegelenkhebelanordnungen 28 hintergreifen die Gipskartonplatte 42 und verankern auf diese Weise den Dübel 10 an der Gipskartonplatte 42.

Beim Anziehen der Spreizschraube 46 gelangt das Spreizelement 26 mit Annäherung an die Schafthülse 12 zwischen die Zungen 38, die das Spreizelement 26 aufgrund dessen rechteckigen Querschnitts verdrehsicher zwischen sich aufnehmen.

Beim weiteren Anziehen der Spreizschraube 46 gelangt das Spreizelement 26, dessen der Schafthülse 12 zugewandtes Ende keilförmig ausgebildet ist, zwischen die Spreizzungen 18 der Schafthülse 12 und spreizt diese auseinander, wie in Figur 4 zu sehen. Beim Eindringen des Spreizelementes 26 zwischen die Spreizzungen 18 reißt das Spreizelement 26 Trennstellen 48 auf, die die Spreizzungen 18 an deren vorderen, dem Spreizelement 26 zugewandten Enden miteinander verbinden (Figur 1). Das Eindringen des Spreizelements 26 zwischen die Spreizzungen 18 und das Auseinanderreißen der Trennstellen 48 wird durch die Zungen 38, die die Verdrehsicherung für das Spreizelement 26 bilden, erleichtert.

Durch das Aufspreizen der Spreizzungen 18 mit dem Spreizelement 26 werden die Spreizzungen 18 an ihren vorderen, dem Bund 20 abgewandten Enden so weit auseinander gespreizt, daß sich die Schafthülse 12 mit ihren Spreizzungen 18 kegelförmig in Richtung des dem Bund 20 abgewandten Endes der Schafthülse 12 aufweitet. Die Spreizzungen 18 drücken sich in die Gipskartonplatte 42 ein und weiten deren Loch kegelförmig so auf, daß es eine Hinterschneidung bildet, in der die Schafthülse 12 mit ihren Spreizzungen 18 formschlüssig einliegt. Dadurch wird die Verankerung des Dübels 10 in der Gipskartonplatte 42 verbessert.

Ist der Dübel 10 wie in Figur 4 dargestellt voll aufgespreizt, so daß die hinteren Kniegelenkhebel 34 näherungsweise vollflächig an der Gipskartonplatte 42 anliegen, stoßen die vorderen Kniegelenkhebel 32 gegen die Zungen 38, die die Verdrehsicherung für das Spreizelement 26 bilden. Die Zungen 38 stützen die Kniegelenkhebelanordnungen 28 in der voll ausgestellten Stellung ab, sie bilden eine Abstützung, die die Kniegelenkhebelanordnungen 28 stabilisiert.

## Patentansprüche

1. Dübel (10) mit einer Schafthülse (12), durch die eine Spreizschraube (46) durchführbar ist, mit einem Spreizelement (26), das in Verlängerung der Schafthülse angeordnet und in das die Spreizschraube einschraubbar ist, wobei das Spreizelement über mindestens eine Kniegelenkhebelanordnung (28) mit der Schafthülse verbunden ist, die sich nach außen ausstellt, wenn das Spreizelement mit der Spreizschraube in Richtung der Schafthülse gezogen wird, **dadurch gekennzeichnet, daß** der Dübel (10) eine Verdrehsicherungseinrichtung (38) aufweist, die ein Verdrehen des Spreizelements (26) gegenüber der Schafthülse (12) vermeidet.

2. Dübel nach Anspruch 1, **dadurch gekennzeichnet, daß** das Spreizelement (26) einen unrunden Querschnitt aufweist, und daß die Schafthülse (12) eine komplementäre Aufnahme (38) als Verdrehsicherungseinrichtung (38) für das Spreizelement (26) aufweist, in die das Spreizelement (26) gelangt, wenn es in Richtung der Schafthülse (12) gezogen wird.

3. Dübel nach Anspruch 2, **dadurch gekennzeichnet, daß** die Aufnahme (38) zwei Zungen (38) aufweist, die parallel zueinander und mit Abstand voneinander angeordnet sind und die von der Schafthülse (12) in Richtung des Spreizelements (26) abstehen.

4. Dübel nach Anspruch 1, **dadurch gekennzeichnet, daß** die Schafthülse (12) als Spreizhülse ausgebildet ist, die von der Spreizschraube (46) und/oder von dem Spreizelement (26) aufgespreizt wird.

5. Dübel nach Anspruch 4, **dadurch gekennzeichnet, daß** die Schafthülse (12) eine oder mehrere Trennstellen (48) aufweist, die beim Eindrehen der Spreizschraube (46) und/oder beim Einziehen des Spreizelements (26) durchgetrennt werden.

6. Dübel nach Anspruch 1, **dadurch gekennzeichnet, daß** der Dübel (10) eine Abstützung (38) für die Kniegelenkhebelanordnung (28) aufweist, die die Kniegelenkhebelordnung (28) in der ausgestellten Stellung abstützt.

## Claims

1. Fixing plug (10) having a shank sleeve (12) through which an expanding screw (46) can be passed and having an expansion element (26) which is arranged in extension of the shank sleeve and into which the expanding screw can be screwed, the expansion element being connected to the shank sleeve by way of at least one toggle joint lever arrangement (28) which splays outwards when the expansion element is drawn in the direction of the shank sleeve by means of the expanding screw, **characterised in that** the fixing plug (10) has an anti-twisting device (38) which avoids twisting of the expansion element (26) with respect to the shank sleeve (12).

2. Fixing plug according to claim 1, **characterised in that** the expansion element (26) has a non-circular cross-section; and the shank sleeve (12) has, as the anti-twisting device (38), a complementary holder (38) for the expansion element (26), into which the expansion element (26) moves when it is drawn in the direction of the shank sleeve (12).

3. Fixing plug according to claim 2, **characterised in that** the holder (38) has two tongues (38), which are arranged parallel to one another and spaced apart from one another and which project from the shank sleeve (12) in the direction of the expansion element (26).

4. Fixing plug according to claim 1, **characterised in that** the shank sleeve (12) is in the form of an expansion sleeve, which is expanded by the expanding screw (46) and/or by the expansion element (26).

5. Fixing plug according to claim 4, **characterised in that** the shank sleeve (12) has one or more separable junctions (48), which are caused to be separated when the expanding screw (46) is being screwed in and/or when the expansion element (26) is being drawn in.

6. Fixing plug according to claim 1, **characterised in that** the fixing plug (10) has a support (38) for the toggle joint lever arrangement (28), which supports the toggle joint lever arrangement (28) in the splayed-out position.

## Revendications

1. Cheville (10) comprenant une tige de type manchon (12), à travers laquelle peut passer une vis d'expansion (46), un élément expansible (26), qui est agencé dans le prolongement de la tige de type manchon et dans lequel peut être vissée la vis d'expansion, l'élément expansible étant assemblé avec la tige de type manchon par au moins un système de levier à genouillère (28), qui s'écarte vers l'extérieur lorsque l'élément expansible est tiré avec la vis d'expansion en direction de la tige de type manchon, **caractérisée en ce que** la cheville (10) comporte une unité anti-rotation (38), qui empêche la rotation de l'élément expansible (26) par rapport à la tige de type manchon (12).

2. Cheville selon la revendication 1, **caractérisée en ce que** l'élément expansible (26) possède une section ovalisée et **en ce que** la tige de type manchon (12) comporte un logement (38) complémentaire formant une unité anti-rotation (38) pour l'élément expansible (26), dans laquelle s'engage l'élément expansible (26) lorsqu'il est tiré en direction de la tige de type manchon (12).

3. Cheville selon la revendication 2, **caractérisée en ce que** le logement (38) comporte deux languettes (38), qui sont disposées parallèlement et à distance l'une de l'autre et lesquelles sont en saillie sur la tige de type manchon (12) en direction de l'élément expansible (26).

4. Cheville selon la revendication 1, **caractérisée en ce que** la tige de type manchon (12) est conçue sous forme de manchon expansible, qui est dilaté par la vis d'expansion (46) et/ou par l'élément expansible (26).

5. Cheville selon la revendication 4, **caractérisée en ce que** la tige de type manchon (12) comporte une ou plusieurs zones de séparation (48) qui se sectionnent sous l'effet du vissage de la vis d'expansion (46) et/ou de l'engagement de l'élément expansible (26).

6. Cheville selon la revendication 1, **caractérisée en ce que** la cheville (10) comporte un support (38) pour le système de levier à genouillère (28), lequel forme un appui pour le système de levier à genouillère (28) dans la position écartée.
